# EUROPÄISCHE PATENTANMELDUNG

(11) **EP 3 037 720 A1**
(43) Veröffentlichungstag der Anmeldung: **29.06.2016**
(21) Anmeldenummer: 15199487.8
(22) Anmeldetag: 11.12.2015
(51) Int. Cl.: F21V 7/16, G02B 19/00

(54) **REFLEKTORKÖRPER FÜR LAMPEN**

(30) Priorität: 23.12.2014 DE 102014119516
(71) Anmelder: Iventum GmbH, 42697 Solingen (DE)
(72) Erfinder: BUHL, Tim William, 42697 Solingen (DE)
(74) Vertreter: Patentanwälte Vomberg & Schart

(57) **Zusammenfassung**

Die vorliegende Erfindung betrifft einen Reflektorkörper zur gerichteten Abstrahlung eines Lichtkegels mit einem Öffnungswinkel α mit einer rückwärtigen Lichteintrittsfläche, einer frontseitigen Lichtaustrittsfläche und einer ersten Reflektorfläche, wobei die Flächen derart zueinander ausgerichtet sind, dass durch die Lichteintrittsfläche das in den Reflektorkörper einfallende Licht direkt oder indirekt eine Reflektion an der Reflektorfläche erfährt und durch die Lichtaustrittsfläche abgestrahlt wird. Um einen solchen Reflektorkörper derart fortzubilden, dass mit einfachen Mitteln eine Fokussierung und/oder Defokussierung des Lichtkegels möglich ist, wird vorgeschlagen, dass der Reflektorkörper zumindest teilweise oder vollständig aus einem elastischen Material besteht, so dass die Abstrahlcharakteristik, insbesondere der Öffnungswinkel α des Lichtkegels, durch eine Deformation des Reflektorkörpers veränderbar ist und dass die erste Reflektorfläche eine reflektierende Metallbeschichtung aufweist, die vorzugsweise auf das elastische Material des Reflektorkörpers aufgedampft ist.

## Beschreibung

Die vorliegende Erfindung betrifft einen Reflektorkörper zur gerichteten Abstrahlung eines Lichtkegels mit einem Öffnungswinkel α mit einer rückwärtigen Lichteintrittsfläche, einer frontseitigen Lichtaustrittsfläche und einer ersten Reflektorfläche, wobei die Flächen derart zueinander ausgerichtet sind, dass das in den Reflektorkörper einfallende Licht direkt oder indirekt eine Reflektion an der Reflektorfläche erfährt und durch die Lichtaustrittsfläche abgestrahlt wird.

Die eingangs genannten Reflektorkörper sind in Abgrenzung zu herkömmlichen Reflektoren als Vollkörper ausgebildet und bestehen hauptsächlich oder vollständig aus einem lichttransparenten Material, so dass das Licht ohne nennenswerte Verluste innerhalb des Reflektorkörpers geleitet werden kann.

Reflektorkörper sind beispielsweise aus US 7,181,378 A2 bekannt, wo unterschiedliche Formen beschrieben werden. In allen Ausführungsbeispielen werden die Lichtstrahlen, die durch die rückwärtige Lichteintrittsfläche in den transparenten Reflektorkörper eintreten, zunächst an der frontseitigen Lichtaustrittsfläche reflektiert und treffen anschließend auf die rückwärtige Reflektorfläche. Dort werden die Lichtstrahlen wiederrum in die Richtung der Lichtaustrittsfläche reflektiert, wo sie den Reflektorkörper in Form eines Lichtkegels mit einem definierten Öffnungswinkel α verlassen. Der Vorteil derartiger Reflektorkörper gegenüber von Linsen, die für ähnliche Zwecke eingesetzt werden, ist, dass der abgestrahlte Lichtkegel sehr homogen ist und wenig blendet. Nachteilig ist allerdings, dass der Öffnungswinkel des Lichtkegels durch die geometrische Form des Reflektorkörpers vorgegeben ist und eine Variation und mithin eine Fokussierung und/oder eine Defokussierung nicht möglich ist.

Es ist daher die Aufgabe der vorliegenden Erfindung, einen Reflektorkörper der eingangs genannten Art derart fortzubilden, dass mit einfachen Mitteln eine Fokussierung und/oder eine Defokussierung des Lichtkegels möglich ist.

Diese Aufgabe wird durch den Reflektorkörper nach Anspruch 1 gelöst, der zumindest teilweise oder vollständig aus einem elastischen Material besteht, so dass die Abstrahlcharakteristik, insbesondere der Öffnungswinkel α des Lichtkegels, durch eine Deformation des Reflektorkörpers veränderbar ist. Ferner weist die erste Reflektorfläche eine reflektierende Metallbeschichtung auf, die vorzugsweise auf das elastische Material des Reflektorkörpers aufgedampft ist.

Die elastischen Reflektorkörper der beanspruchten und erfindungsgemäßen Art besitzen eine selbsttragende Stabilität, so dass sie ohne ein stützendes ebenfalls elastisches Gehäuse verwendbar sind.

Mit anderen Worten, der vorzugsweise gehäuselose Reflektorkörper ist elastisch ausgestaltet und lässt sich mit geeigneten Mitteln dehnen oder stauchen, wodurch sich nicht nur die Krümmung der Reflektorfläche sondern auch deren Winkellage relativ zur Lichtquelle verändert. Hierdurch lässt sich der Öffnungswinkel α des Lichtkegels variieren und den gewünschten Bedingungen anpassen. Die Stauchung bzw. Dehnung des Reflektorkörpers erfolgt vorzugsweise parallel zur optischen Achse, wodurch der Lichtkegel eine symmetrische Veränderung erfährt. Selbstverständlich sind auch andere asymmetrische Formveränderungen denkbar, die eine entsprechende asymmetrische Veränderung des Lichtkegels bewirken.

Reflektorkörper der erfindungsgemäßen Art können in Strahlern oder anderen Lampen, Taschenlampen oder Bodenleuchten eingebaut werden.

Bevorzugte Ausgestaltungen der vorliegenden Erfindung werden nachfolgend und in den Unteransprüchen beschrieben.

Nach einer ersten bevorzugten Ausgestaltung der Erfindung ist vorgesehen, dass die frontseitige Lichtaustrittsfläche gegenüber der rückwärtigen Lichteintrittsfläche derart positioniert oder winkelig angeordnet ist, dass unmittelbar von dort auf die Lichtaustrittsfläche auftreffende Lichtstrahlen eine Totalreflektion erfahren und innerhalb des Reflektorkörpers auf die erste Reflektorfläche reflektiert werden. Demgegenüber werden solche Lichtstrahlen, die von der Lichteintrittsfläche unmittelbar auf die erste Reflektorfläche fallen, derart in die Richtung der Lichtaustrittsfläche reflektiert, dass eine weitere Reflektion innerhalb des Reflektorkörpers vermieden wird. Hierdurch ergeben sich nicht nur wenig Verluste an Lichtleistung und mithin ein hoher Wirkungsgrad, sondern auch eine homogene und nahezu blendfreie Ausleuchtung.

Ferner ist vorzugsweise vorgesehen, dass die Lichteintrittsfläche und/oder die Lichtaustrittsfläche als zweite Reflektorfläche ausgebildet ist und abschnittsweise eine reflektierende Metallbeschichtung aufweist, die nach einer vorteilhaften Ausgestaltung der Erfindung auf das elastische Material der Reflektorkörpers aufgedampft ist.

Als bevorzugte Elastomere haben sich in der Praxis Silikone, vorzugsweise Silikonelastomere erwiesen. Ein solches Material ist für die Verwendung als Reflektorkörper besonders geeignet, da das Material einen geringen Absorptionskoeffizienten aufweist und dennoch günstig herstellbar und präzise zu verarbeiten ist. Ferner sind die bevorzugten Materialien robust und wetterbeständig, so dass sie bei Strahlern und Taschenlampen auch im outdoor-Bereich verwendbar sind.

Nach einer weiteren bevorzugten Ausgestaltung der Erfindung ist die erste Reflektorfläche im unbelasteten Zustand parabol- oder kegelförmig ausgestaltet. Bei einer Stauchung des Reflektorkörpers wird die erste Reflektorfläche verformt und nimmt eine hiervon abweichende Formgestaltung an, wobei sich der Abstrahlwinkel des Lichtkegels ändert.

Prinzipiell ist die Position der Lichtquelle gegenüber dem Reflektorkörper nicht von entscheidender Bedeutung. Um unnötige Verluste an Lichtleistung zu vermeiden, ist jedoch nach einer bevorzugten Ausgestaltung der Erfindung vorgesehen, dass die rückwärtige Lichteintrittsfläche innerhalb einer rückwärtigen Ausnehmung des Reflektorkörpers ausgebildet ist, die vorzugsweise eine Lichtquelle aufnimmt. Hierdurch wird nahezu die gesamte Menge an emittiertem Licht abgestrahlt, womit geringe Verluste verbunden sind.

In vergleichbarer Weise kann die Lichteintrittsfläche eben, gekrümmt oder kegelförmig ausgebildet sein, wobei auch bei einer kegelförmigen Ausgestaltung eine konkave oder konvexe Außenkontur des Kegelmantels möglich und vorteilhaft ist.

Ferner ist vorzugsweise vorgesehen, dass die frontseitige Lichtaustrittsfläche im Wesentlichen eben, kegelförmig oder parabolförmig ausgebildet ist.

Sofern eine symmetrische Ausleuchtung und mithin ein symmetrischer Lichtkegel gewünscht wird, ist nach einer weiteren bevorzugten Ausgestaltung vorgesehen, dass der Reflektorkörper im unbelasteten Zustand rotationssymmetrisch ist. Dennoch erlaubt auch ein im unbelasteten Zustand rotationssymmetrischer Reflektorkörper eine asymmetrische Ausleuchtung, sofern der Reflektorkörper asymmetrisch verformt wird.

Um zu verhindern, dass ein Lichtstrahl innerhalb des Reflektorkörpers mehrfach an der Reflektorfläche und der gegenüberliegenden Lichtaustrittsfläche totalreflektiert wird, ist nach einer besonderen Ausgestaltung der Erfindung vorgesehen, dass die Lichtaustrittsfläche zumindest teilweise, vorzugsweise in der vorderen Hälfte, lichtabsorbierende Strukturen aufweist, die insbesondere aus satinierten Flächenabschnitten, Facetten oder Dellen ausgebildet sind. Derartige Strukturen vermeiden eine unerwünschte Reflektion und führen zu einer unmittelbaren Abstrahlung des Lichtkegels.

Schließlich ist zur weiteren Erhöhung des Wirkungsgrads vorgesehen, dass die Reflektorfläche eine reflektierende Metallbeschichtung aufweist, die vorzugsweise aufgedampft wird.

Konkrete Ausgestaltungen der vorliegenden Erfindung werden nachfolgend anhand der Figuren erläutert. Es zeigen
- Fig. 1:: eine perspektivische Darstellung eines erfindungsgemäßen Reflektorkörpers,
- Fig. 2a:: eine schematische Querschnittdarstellung eines Reflektorkörpers innerhalb einer Lampe im unbelasteten Zustand,
- Fig. 2b,c,d:: schematische Querschnittsdarstellungen weiterer Reflektorkörper,
- Fig. 3:: eine schematische Querschnittdarstellung eines Reflektorkörpers in einer Lampe im belasteten Zustand und
- Fig. 4a-d: weitere Darstellungen einer Leuchte mit einem Reflektorkörper.

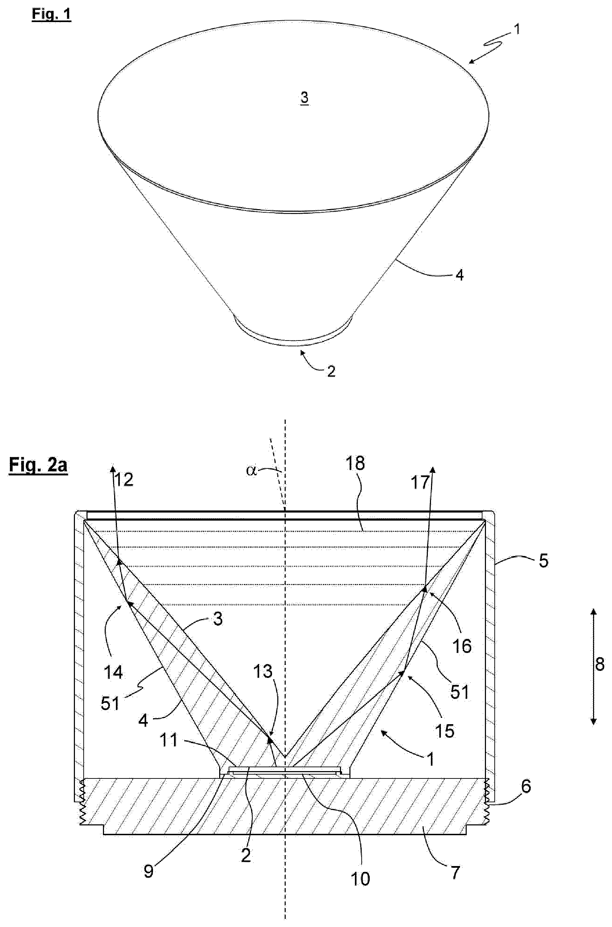

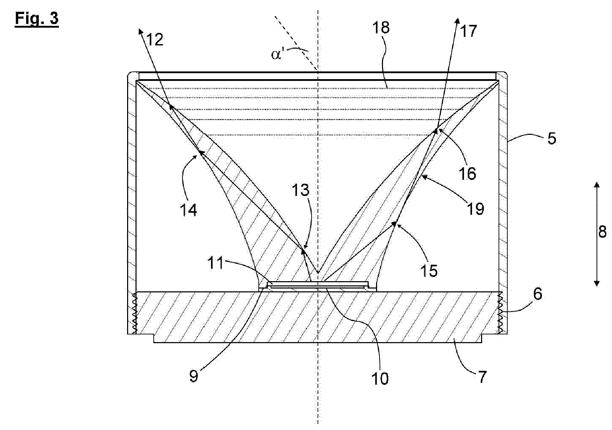

Fig. 1 zeigt eine einfache Form eines erfindungsgemäßen und gehäuselosen Reflektorkörpers 1 mit einer rückwärtigen Lichteintrittsfläche 2, einer frontseitigen Lichtaustrittsfläche 3 und einer ersten Reflektorfläche 4, die eine Metallbeschichtung 51 aufweist. Die Geometrie der jeweiligen Flächen ist in den Fig. 2a und 3 zu erkennen.

In Fig. 2a ist ein Reflektorkörper 1 im unbelasteten Zustand dargestellt, wie er innerhalb eines Lampenkopfes 5 gelagert ist. Der Lampenkopf 5 ist über einen Gewindeabschnitt 6 mit einem Halter 7 verbunden, so dass der Lampenkopf längsaxial beweglich ist (Pfeilrichtung 8). Der Reflektorkörper 1 ruht mit einer rückwärtigen Auflagefläche 9 auf dem Halter 7 und stößt am vorderen Ende mit einer ringförmigen Auflagefläche an der Stirnseite des Lampenkopfes 5 an. Der Halter 7 weist in der Mitte eine Lichtquelle 10 auf, die einer rückwärtigen Ausnehmung 11 innerhalb des Reflektorkörpers 1 ruht.

In Fig. 2a sind (links und rechts) zwei Beispielfälle dargestellt, wie das von der Lichtquelle 10 abgestrahlte Licht innerhalb des Reflektorkörpers 1 abgestrahlt wird. Der Lichtstrahl 12 (linkes Fallbeispiel in Fig. 2a) trifft von der Lichtquelle 10 ausgehend zunächst auf die frontseitige Lichtaustrittsfläche 3, wo der Lichtstrahl 12 eine Totalreflektion erfährt (Pfeil 13). Innerhalb des Reflektorkörpers 1 wird der Lichtstrahl 12 anschließend zu der rückwärtigen ersten Reflektorfläche 4 geleitet, wo ebenfalls eine Reflektion an der Metallbeschichtung 51 stattfindet (Pfeil 14). Hiernach wird der Lichtstrahl 12 unmittelbar auf die Lichtaustrittsfläche 3 geleitet, wo der Lichtstrahl 12 schließlich abgestrahlt wird.

Auf der rechten Seite der Fig. 2a ist ein anderes Fallbeispiel dargestellt, wo der Lichtstrahl 17 von der Lichtquelle 10 ausgehend unmittelbar auf die metallbeschichtete erste Reflektorfläche 4 fällt, wo der Lichtstrahl 17 reflektiert wird (Pfeil 15) und anschließend bei der Lichtaustrittsfläche 3 aus dem Reflektorkörper 1 austritt (Pfeil 16).

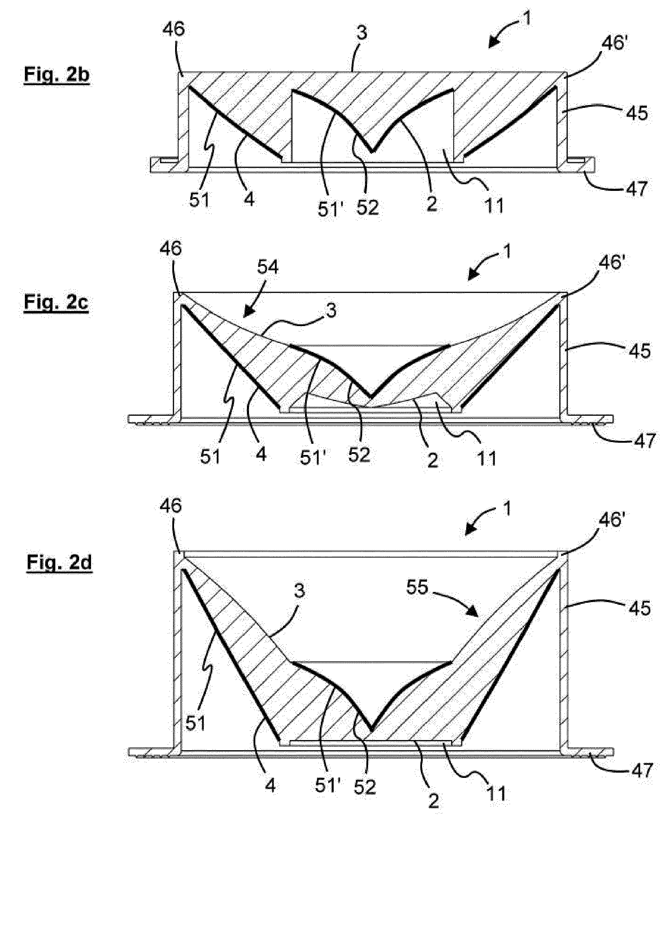

Im dargestellten Ausführungsbeispiel befindet sich der Reflektorkörper 1 im unbelasteten Zustand, so dass der Lichtkegel einen kleinen Öffnungswinkel α relativ zur optischen Achse aufweist. Durch eine Drehung des Lampenkopfes 5 wird der Reflektorkörper 1 gestaucht, so dass sowohl die erste Reflektorfläche 4 als auch die frontseitige Lichtaustrittsfläche 3 von einer nahezu linearen zu einer bogenförmigkonkaven bzw. bogenförmig-konvexen Form übergeht (vgl. Fig. 3). Wie bereits die abgestrahlten Lichtstrahlen 12 und 17 in Fig. 3 erkennen lassen, die den Fallbeispielen gemäß Fig. 2 entsprechen, vergrößert sich hierdurch der Öffnungswinkel α des Lichtkegels, womit eine wesentlich breitere Abstrahlung erfolgt.

Um zu verhindern, dass der vordere Teil des Reflektorkörpers 1 als Lichtleiter dient und mehrere Totalreflektionen zwischen der Reflektorfläche 4 und der frontseitigen Lichtaustrittsfläche 3 stattfinden, sind nach einer konkreten Ausgestaltung der Erfindung Strukturen 18 in den Reflektorkörper 1 eingearbeitet, die eine weitere Totalreflektion an der Lichtaustrittsfläche 3 vermeiden.

Die Fig. 2b, c und d zeigen weitere Ausgestaltungen eines elastischen Reflektorkörpers 1 im unbelasteten Zustand. Die Reflektorkörper 1 besitzen eine aufgedampfte Metallbeschichtung 51 aus der ersten Reflektorfläche 4 und eine vergleichsweise groß ausgebildete rückwärtige Ausnehmung 11.

Bei dem Reflektorkörper 1 gemäß Fig. 2b ist die Stirnseite der Ausnehmung 11 und mithin die Lichteintrittsfläche 2 in diesem Abschnitt als kegelförmige zweite Reflektorfläche 52 mit einer konkaven Außenfläche und einer aufgedampften Metallbeschichtung 51' ausgebildet. Hierdurch werden die Lichtstrahlen von der Lichtquelle (in Fig. 2b,c,d nicht dargestellt) unmittelbar auf die erste Reflektorfläche 4 reflektiert und treten aus der ebenen Lichtaustrittsfläche 3 aus.

Die Fig. 2c, d zeigen demgegenüber jeweils einen Reflektorkörper 1, bei dem die zweite Reflektorfläche 52 auf der frontseitigen Lichtaustrittsfläche 3 in Form einer aufgedampften Metallbeschichtung 51' ausgebildet sind. Hierbei gelangen die Lichtstrahlen zunächst in den Reflektorkörper 1 und werden anschließend an der zweiten Reflektorfläche 52 auf die erste Reflektorfläche 4 reflektiert, die ebenfalls eine aufgedampfte Metallbeschichtung 51 besitzt.

Die Lichteintrittsfläche gemäß der Ausführungsform nach Fig. 2b weist eine konische Seitenfläche 53 und eine konvexe Lichteintrittsfläche 2 auf. Der nicht beschichtete Abschnitt der Lichtaustrittsfläche 3 ist parabolförmig ausgestaltet (Pfeil 54).

Demgegenüber besitzt die Ausführungsform eines Reflektorkörpers 1 gemäß Abbildung 2d eine flache scheibenförmige Ausnehmung 11 und eine im Wesentlichen kegelstumpfförmige Lichtaustrittsfläche 3 mit einer leichten konvexen Krümmung (Pfeil 55). Im metallbeschichteten Abschnitt der Lichtaustrittsfläche 3 ist eine konvexe Krümmung vorgesehen, so dass die reflektierenden Lichtstrahlen auf die rückwärtige erste Reflektorfläche 4 geworfen werden.

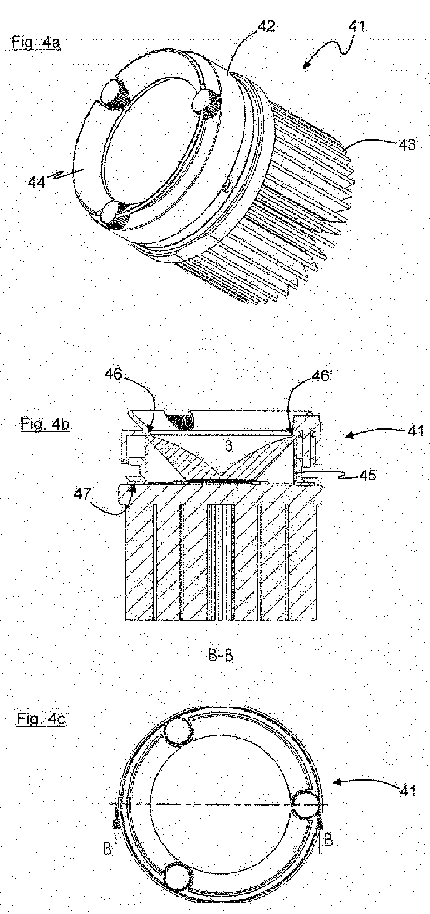

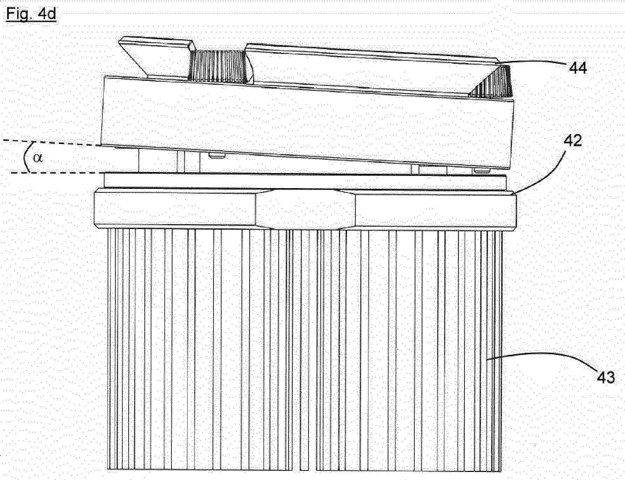

In Fig. 4a ist beispielhafte eine Leuchte 41 mit einem Gehäuse 42 und einem rückwärtigen Kühlkörper 42 gezeigt. Frontseitig wird die Leuchte 41 durch einen Deckel 44 verschlossen, der mit einer 3-Punkt-Fixierung lösbar (über drei Schrauben) mit dem Gehäuse 42 verbunden ist. Hierdurch lässt sich der Deckel 44 in Bezug auf das Gehäuse 42 winklig fixieren, so dass ein unterhalb des Deckels 44 angeordneter Reflektorkörper 1 schief bzw. asymmetrisch verformt wird. Eine schiefwinklige Befestigung des Deckels ist in Fig. 4d gezeigt. Hierdurch lässt sich beispielsweise eine homogene Ausleuchtung einer schiefwinkligen Fläche erzeugen.

Die Fig. 4b und 4c zeigen eine solche Leuchte gemäß Fig. 4a in einer schematischen Querschnittsdarstellung (Fig. 4b) sowie in einer Draufsicht (Fig. 4c).

Im Unterschied zu dem Reflektorkörper 1 nach den Fig. 1, 2a und 3 weist der in Fig. 4b dargestellte Reflektorkörper einen zylinderförmigen Stützmantel 45 auf, der an den Spitzen 46, 46' des Reflektorkörpers 1 stoffschlüssig befestigt ist. Der zylinderförmige Stützmantel 45 weist an seiner Unterseite eine horizontale Ringfläche 47 auf, die eine Klemmfläche für eine Befestigung des Reflektorkörpers mit dem Gehäuse darstellt. Die Reflektorkörper 1 gemäß den Ausführungsbeispielen der Fig. 2b, c, d besitzen ebenfalls einen solchen Stützmantel 45 mit einer horizontalen Ringfläche 47.

## Patentansprüche

1. Reflektorkörper zur gerichteten Abstrahlung eines Lichtkegels mit einem Öffnungswinkel α mit
- einer rückwärtigen Lichteintrittsfläche (2),
- einer frontseitigen Lichtaustrittsfläche (3) und
- einer ersten Reflektorfläche (4),
wobei die Flächen derart zueinander ausgerichtet sind, dass das in den Reflektorkörper (1) einfallende Licht direkt oder indirekt eine Reflektion an der Reflektorfläche (4) erfährt und durch die Lichtaustrittsfläche (3) abgestrahlt wird,
**dadurch gekennzeichnet,dass**
der Reflektorkörper (1) zumindest teilweise oder vollständig aus einem elastischen Material besteht, so dass die Abstrahlcharakteristik, insbesondere der Öffnungswinkel α des Lichtkegels, durch eine Deformation des Reflektorkörpers (1) veränderbar ist und dass die erste Reflektorfläche (4) eine reflektierende Metallbeschichtung (51) aufweist, die vorzugsweise auf das elastische Material des Reflektorkörpers (1) aufgedampft ist.

2. Reflektorkörper nach Anspruch 1, **dadurch gekennzeichnet, dass** die frontseitige Lichtaustrittsfläche (3) gegenüber der rückwärtigen Lichteintrittsfläche (2) derart positioniert oder winklig angeordnet ist, dass unmittelbar von dort auf die Lichtaustrittsfläche (3) auftreffende Lichtstrahlen (12, 17) eine Totalreflektion erfahren und innerhalb des Reflektorkörpers (1) auf die Reflektorfläche (4) reflektiert werden.

3. Reflektorfläche nach einem der Ansprüche 1 oder 2, **dadurch gekennzeichnet, dass** die Lichteintrittsfläche (2) und/oder die Lichtaustrittsfläche (3) als zweite Reflektorfläche (4) ausgebildet ist und abschnittsweise eine reflektierende Metallbeschichtung (51') aufweist, die vorzugsweise auf das elastische Material des Reflektorkörpers (1) aufgedampft ist.

4. Reflektorkörper nach einem der Ansprüche 1 bis 3, **dadurch gekennzeichnet, dass** der Reflektorkörper (1) aus Silikon, vorzugsweise Silikonelastomer, besteht.

5. Reflektorkörper nach einem der Ansprüche 1 bis 4, **dadurch gekennzeichnet, dass** die erste Reflektorfläche (4) im unbelasteten Zustand parabol- oder kegelförmig ausgestaltet ist.

6. Reflektorkörper nach einem der Ansprüche 1 bis 5, **dadurch gekennzeichnet, dass** die rückwärtige Lichteintrittsfläche (2) innerhalb einer rückwärtigen Ausnehmung des Reflektorkörpers (1) ausgebildet ist, die vorzugsweise eine Lichtquelle (10) aufnimmt.

7. Reflektorkörper nach einem der Ansprüche 1 bis 6, **dadurch gekennzeichnet, dass** die Lichteintrittsfläche (2) eben, gekrümmt, oder kugelförmig ausgebildet ist.

8. Reflektorkörper nach einem der Ansprüche 1 bis 7, **dadurch gekennzeichnet, dass** die frontseitige Lichtaustrittsfläche (3) im Wesentlichen eben kegelförmig oder parabolförmig ausgebildet ist.

9. Reflektorkörper nach einem der Ansprüche 1 bis 8, **dadurch gekennzeichnet, dass** der Reflektorkörper (1) im unbelasteten Zustand rotationssymmetrisch ausgestaltet ist.

10. Reflektorkörper nach einem der Ansprüche 1 bis 9, **dadurch gekennzeichnet, dass** die Lichtaustrittsfläche (3) zumindest teilweise, vorzugsweise in der vorderen Hälfte, lichtabsorbierende Strukturen (18) aufweist, die insbesondere aus satinierten Flächenabschnitten, Facetten oder Dellen ausgebildet sind.

11. Reflektorkörper nach einem der Ansprüche 1 bis 10, **dadurch gekennzeichnet, dass** der Reflektorkörper gehäuselos ist und/oder ohne ein elastisches Gehäuse selbsttragend ist.
